# EUROPÄISCHE PATENTANMELDUNG

(11) **EP 4 534 357 A1**
(43) Veröffentlichungstag der Anmeldung: **09.04.2025**
(21) Anmeldenummer: 23201596.6
(22) Anmeldetag: 04.10.2023
(51) Int. Cl.: B60R 16/023, B60R 16/03

(54) **INITIALISIERUNG VON ZONENMODULEN**

(71) Anmelder: LEONI Bordnetz-Systeme GmbH, 97318 Kitzingen (DE)
(72) Erfinder: Holzmann, Frédéric, 97084 Würzburg (DE)
(74) Vertreter: Frenkel, Matthias Alexander

(57) **Zusammenfassung**

Es werden ein System und ein Verfahren zur Initialisierung eines Zonenmoduls (100) eines Bordnetzes eines Fahrzeugs (1) beschrieben. Ein Ausführungsbeispiel des System weist auf: ein für das Zonenmodul (100) vorgesehenes Zonensteuergerät (120), das ausgebildet ist, einen lokalen Diagnosevorgang zur Prüfung von Komponenten (140) des Zonenmoduls (100) durchzuführen; und eine fahrzeugseitig vorgesehene Rechnervorrichtung (20), die ausgebildet ist, in einem in das Fahrzeug (1) eingebauten Zustand des Zonenmoduls (100), einen Initialisierungsvorgang zur Initialisierung der Komponenten (140) des Zonenmoduls (100) zu initiieren.

## Beschreibung

Die vorliegende Erfindung betrifft im Allgemeinen eine Initialisierung von Zonenmodulen eines Bordnetzes eines Fahrzeugs. Im Speziellen betrifft die vorliegende Erfindung ein System und ein Verfahren zur Initialisierung eines Zonenmoduls eines Bordnetzes eines Fahrzeugs

Der Betrieb eines Fahrzeugs hängt von der Zusammenarbeit von Funktionskomponenten an verschiedenen Stellen im Fahrzeug ab. In modernen Fahrzeugen wird zunehmend digitale Netzwerktechnologie aufgrund ihrer Kosteneffizienz, Raumeffizienz und Flexibilität für die Fahrzeugkommunikation genutzt. Mit Hilfe digitalisierter Steuerung wird eine Vielzahl von Funktionen realisiert.

Fahrzeuge werden heutzutage zunehmend zu mobilen Informationssystemen. Die rasante Entwicklung der Fahrzeugfähigkeiten bringt neue Herausforderungen und Anforderungen an automobile Netzwerksysteme mit sich. So nimmt die Menge der in einem Fahrzeug übertragenen Informationen mit dem Einsatz zusätzlicher elektronischer und digitaler Komponenten deutlich zu. Um beispielsweise ein Fahrzeug mit autonomen Fahrfähigkeiten zu realisieren, müssen Hunderte von einzelnen elektronischen Steuergeräten (ECUs) und Sensoren installiert und miteinander vernetzt werden.

Herkömmliche Fahrzeugkommunikations-Netzwerkarchitekturen basieren auf dem Konzept der Fahrzeugsystemdomänen. Bei diesem Konzept sind ECUs, Sensoren und/oder Aktuatoren für gleich funktionierende Systeme hinter einer Domänen-Steuereinheit (DCU) zusammengefasst. Diese Architektur basiert auf der Funktion der Systeme im Fahrzeug, nicht unbedingt auf der Position der Systeme im Fahrzeug. Daher wird hinter einer DCU die physische Verkabelung von ECUs, Sensoren und/oder Aktuatoren einer Domäne des gesamten Fahrzeug angeordnet. Dies führt zu einer aufwändigen und komplexen Verkabelung.

Da zunehmend mehr ECUs, Sensoren und/oder Aktuatoren in Fahrzeugen benötigt und angeordnet werden, wurde das Konzept einer zonenbasierten, zentralen, rechnergestützten Fahrzeugkommunikations-Netzwerkarchitektur im Fahrzeug vorgeschlagen. Diese zonenbasierte Architektur verwendet eine Reihe von universellen, konfigurierbaren Zonensteuergeräten (ZCUs) an verschiedenen Stellen im Fahrzeug. Jede ZCU befindet sich vor einer Reihe von ECUs, Sensoren und/oder Aktuatoren, die sich physisch in dem der ZCU zugeordneten Bereich, d. h. "Zone", des Fahrzeugs befinden, ohne Rücksicht auf die Gemeinsamkeit der Systemfunktion. Auf diese Weise wird der physische Verdrahtungsaufwand deutlich reduziert.

Bei der derzeitigen Fertigung von Fahrzeugen mit domänenbasierter, zonenbasierter und hybrider (d. h. einer Mischung von domänenbasierter und zonenbasierter Architektur) Bordnetzarchitektur werden die Fahrzeuge zunächst vollständig montiert und dabei auch mit ihrem Bordnetz versehen. Nach dem vollständigen Zusammenbau werden die elektrischen Komponenten angeschaltet. Anschließend ist es möglich, die Komponenten in verschiedenen Netzwerken des Fahrzeugs zu testen und die Software zu aktualisieren. Dieser herkömmliche Fertigungsprozess ist sehr zeitaufwändig. Letztendlich wartet das strukturell fertig gestellte Fahrzeug auf seine endgültige Fertigstellung durch Konfiguration, Test und/oder Aktualisierung der elektrischen Komponenten.

Es besteht daher ein Bedarf nach einem verbesserten Fertigungsansatz.

Gemäß einem ersten Aspekt der Erfindung wird ein System zur Initialisierung eines Zonenmoduls eines Bordnetzes eines Fahrzeugs vorgeschlagen. Das System weist ein für das Zonenmodul vorgesehenes Zonensteuergerät und eine fahrzeugseitig vorgesehene Rechnervorrichtung auf. Das Zonensteuergerät ist ausgebildet, einen lokalen Diagnosevorgang zur Prüfung von Komponenten des Zonenmoduls durchzuführen. Die fahrzeugseitig vorgesehene Rechnervorrichtung ist ausgebildet, in einem in ein Fahrzeug eingebauten Zustand des Zonenmoduls, einen Initialisierungsvorgang zur Initialisierung der Komponenten des Zonenmoduls zu initiieren.

Da eine Prüfung der Komponenten durch das Zonensteuergerät durchführbar ist, kann die Fertigung des Fahrzeugs flexibler gestaltet werden. Beispielsweise kann das Zonensteuergerät ausgebildet sein, den lokalen Diagnosevorgang zur Prüfung von Komponenten des Zonenmoduls durchzuführen, nachdem das Zonenmodul zusammengebaut oder fertiggestellt wurde.

Das Zonenmodul kann auch als zonales Modul bezeichnet werden. Das Zonensteuergerät kann auch als zonales Steuergerät bezeichnet werden. Die Rechnervorrichtung kann einen Hochleistungsrechner, auf Englisch auch als High Performance Computer (HPC) bezeichnet, aufweisen oder als ein Hochleistungsrechner ausgebildet sein. Der Diagnosevorgang kann als lokal bezeichnet werden, da er lokal das Zonenmodul betrifft, beispielsweise ausschließlich in dem Zonenmodul, insbesondere den Komponenten des Zonenmoduls, durchgeführt wird. Anders ausgedrückt, in dem lokalen Diagnosevorgang kann das Zonenmodul selbst, insbesondere die Komponenten des Zonenmoduls, geprüft werden. In dem Initialisierungsvorgang kann beispielsweise ein Zusammenwirken und/oder eine Funktionsweise und/oder ein Zusammenspiel und/oder ein Vernetzen des Zonenmoduls mit Entitäten des Fahrzeugs initialisiert oder vorbereitet werden. Allgemein ausgedrückt kann der lokale Diagnosevorgang das Zonenmodul lokal betreffen, d. h. isoliert von externen Komponenten beispielsweise des Fahrzeugs, während der Initialisierungsvorgang nicht oder nicht nur das Zonenmodul selbst, sondern insbesondere oder ausschließlich das Zonenmodul in seinem in das Fahrzeug eingebauten Zustand betreffen kann, insbesondere das Zusammenwirken mit externen Komponenten beispielsweise des Fahrzeugs.

Das Zonensteuergerät kann in oder außerhalb des Zonenmoduls angeordnet sein, solange es dem Zonenmodul funktional zugeordnet ist. Das Zonensteuergerät kann mit den Komponenten verbunden sein. Die Komponenten können jegliche elektrische Komponenten des Zonenmoduls aufweisen oder als jegliche elektrischen Komponenten des Zonenmoduls ausgebildet sein. Daher können die Komponenten auch als elektrische Komponenten bezeichnet werden. Insbesondere können die Komponenten Steuergeräte und/oder Sensoren und/oder Aktuatoren des Zonenmoduls aufweisen oder als Steuergeräte und/oder Sensoren und/oder Aktuatoren des Zonenmoduls ausgebildet sein.

Die Prüfung der Komponenten kann eine Vorprüfung der Komponenten sein oder umfassen. Die Prüfung der Komponenten kann eine abschließende Prüfung der Komponenten sein oder umfassen.

Das Zonensteuergerät kann ausgebildet sein, den lokalen Diagnosevorgang vor dem Einbau des Zonenmoduls in das Fahrzeug durchzuführen. Zusätzlich oder alternativ kann das Zonensteuergerät ausgebildet sein, den lokalen Diagnosevorgang nach dem Einbau des Zonenmoduls in das Fahrzeug durchzuführen. Beispielsweise kann das Zonensteuergerät ausgebildet sein, in zwei oder mehr Modi zu arbeiten. In einem ersten Modus kann das Zonensteuergerät vor Einbau des Zonenmoduls in ein Fahrzeug bereits initialisiert sein. In dem ersten Modus kann das Zonensteuergerät daher bereits vor Einbau des Zonenmoduls in das Fahrzeug einen lokalen Diagnosevorgang zur Prüfung, beispielsweise Vorprüfung, von Komponenten des Zonenmoduls durchführen. In dem ersten Modus muss das Zonensteuergerät jedoch nicht den Diagnosevorgang bereits vor dem Einbau des Zonenmoduls in das Fahrzeug durchführen. Es ist in dem ersten Modus auch möglich, dass das Zonensteuergerät den lokalen Diagnosevorgang nach dem Einbau des Zonenmoduls in das Fahrzeug durchführt. In einem zweiten Modus ist das Zonensteuergerät vor dem Einbau des Zonenmoduls in das Fahrzeug noch nicht initialisiert. Erst nach Einbau des Zonenmoduls in das Fahrzeug wird das Zonensteuergerät initialisiert. Demnach kann in dem zweiten Modus das Zonensteuergerät den lokalen Diagnosevorgang erst nach dem Einbau des Zonenmoduls in das Fahrzeug durchführen. Sowohl in dem ersten Modus als auch in dem zweiten Modus ist es demnach möglich, vor Fertigstellung des Fahrzeugs einen lokalen Diagnosevorgang des eingebauten Zonenmoduls durchzuführen. Dies führt zu einer Zeitersparnis bei der Fertigung des Fahrzeugs im Vergleich zu herkömmlichen Verfahren, bei denen das Fahrzeug zunächst strukturell fertig montiert sein/werden muss, bevor Prüfungsverfahren der elektrischen Komponenten durchgeführt werden. In dem ersten Modus ist die Durchführung des lokalen Diagnosevorgangs darüber hinaus bereits bei oder nach Fertigstellung des Zonenmoduls und damit vor dem Einbau des Zonenmoduls möglich. Dies führt zu einer noch größeren Zeitersparnis. Zudem wird durch die Prüfung des Zonenmoduls vor dem Einbau verifiziert, ob das Zonenmodul fehlerfrei ist. Folglich wird ein fehlerfreies Zonenmodul verbaut. Dies ermöglicht zum einen eine Zeitersparnis, da Fehler bereits vor dem Einbau festgestellt werden können. Zum anderen ermöglicht dies, das Zonenmodul vor dem Einbau auszutauschen oder zu reparieren.

Die Rechnervorrichtung kann zur Initiierung des Initialisierungsvorgangs ausgebildet sein, ein für ein anderes Zonenmodul vorgesehenes weiteres Zonensteuergerät zu instruieren, das Zonensteuergerät mit Strom zu versorgen und/oder eine Kommunikation mit dem Zonensteuergerät zu starten. Für die Stromversorgung und/oder die Kommunikation mit dem Zonensteuergerät kann das weitere Zonensteuergerät beispielsweise eine Power over Ethernet Technologie verwenden. Zusätzlich oder alternativ kann die Rechnervorrichtung zur Initiierung des Initialisierungsvorgangs ausgebildet sein, ein lokales Gateway zu instruieren, das Zonensteuergerät mit Strom zu versorgen und/oder eine Kommunikation mit dem Zonensteuergerät zu starten. Das lokale Gateway kann ein in dem Fahrzeug vorhandenes Gateway aufweisen oder als solches ausgebildet sein. Alternativ kann das lokale Gateway eine Vorsicherungsbox des Fahrzeugs aufweisen oder als Vorsicherungsbox des Fahrzeugs ausgebildet sein. Für die Stromversorgung und/oder die Kommunikation mit dem Zonensteuergerät kann das lokale Gateway beispielsweise eine Power over Ethernet Technologie verwenden. Zusätzlich oder alternativ kann die Rechnervorrichtung zur Initiierung des Initialisierungsvorgangs ausgebildet sein, selbst eine Kommunikation mit dem Zonensteuergerät zu starten / zu initiieren.

In dem Initialisierungsvorgang können Kommunikationsinformationen in dem Zonensteuergerät und/oder in den Komponenten des Zonenmoduls aktualisiert werden. Zusätzlich oder alternativ können in dem Initialisierungsvorgang Autorisierungsinformationen in dem Zonensteuergerät und/oder in den Komponenten des Zonenmoduls aktualisiert werden. Die Autorisierungsinformationen können beispielsweise Informationen darüber aufweisen, mit welchen anderen Komponenten, beispielsweise Steuergeräten, kommuniziert werden kann und/oder wie mit diesen kommuniziert werden kann und/oder welche Eingabe-/Ausgabeanschlüsse von wem abgefragt werden können und dergleichen.

Ein für ein anderes Zonenmodul vorgesehenes weiteres Zonensteuergerät kann ausgebildet sein, bei einer erfolgreichen fahrzeugseitigen Autorisierung des Zonenmoduls und/oder einer erfolgreichen zonenmodulseitigen Autorisierung des Zonenmoduls, eine Stromversorgung des Zonenmoduls anzuschalten.

Das Zonensteuergerät kann ausgebildet sein, in dem Initialisierungsvorgang, die Leistungsverteilung in dem Zonenmodul zu überwachen. Ferner kann das Zonensteuergerät ausgebildet sein, in dem Initialisierungsvorgang, eine Prüfung der Komponenten des Zonenmoduls abzuschließen. Ferner kann das Zonensteuergerät ausgebildet sein, in dem Initialisierungsvorgang, einen Flashvorgang der Komponenten des Zonenmoduls abzuschließen. Unter "Flashen" kann hierbei ein Aktualisierungsvorgang von Programmcode und/oder von Daten in den Komponenten, wie beispielsweise in den Steuergeräten, z. B. ECUs, verstanden werden.

Gemäß einem zweiten Aspekt wird ein Verfahren zur Initialisierung eines Zonenmoduls eines Bordnetzes eines Fahrzeugs vorgeschlagen. Das Verfahren umfasst ein Durchführen eines lokalen Diagnosevorgangs zur Prüfung von Komponenten eines Zonenmoduls. Das Verfahren umfasst ferner ein Initiieren, in einem in ein Fahrzeug eingebauten Zustand des Zonenmoduls, eines Initialisierungsvorgangs zur Initialisierung der Komponenten des Zonenmoduls durch eine fahrzeugseitig vorgesehene Rechnervorrichtung.

In dem lokalen Diagnosevorgang kann beispielsweise geprüft werden, ob die richtigen Komponenten in das Zonenmodul integriert sind.

Der lokale Diagnosevorgang kann vor dem Einbau des Zonenmoduls in das Fahrzeug durchgeführt werden. Alternativ kann der lokale Diagnosevorgang nach dem Einbau des Zonenmoduls in das Fahrzeug durchgeführt werden.

Das Initiieren des Initialisierungsvorgangs kann ein Instruieren, durch die Rechnervorrichtung, eines für ein anderes Zonenmodul vorgesehenen weiteren Zonensteuergeräts umfassen, das Zonensteuergerät mit Strom zu versorgen und/oder eine Kommunikation mit dem Zonensteuergerät zu starten, insbesondere unter Verwendung einer Power over Ethernet Technologie. Das Initiieren des Initialisierungsvorgangs kann ein Instruieren, durch die Rechnervorrichtung, eines lokalen Gateways umfassen, das Zonensteuergerät mit Strom zu versorgen und/oder eine Kommunikation mit dem Zonensteuergerät zu starten, insbesondere unter Verwendung einer Power over Ethernet Technologie. Das Initiieren des Initialisierungsvorgangs kann ein Starten, durch die Rechnervorrichtung, einer Kommunikation mit dem Zonensteuergerät umfassen.

In dem Initialisierungsvorgang können Kommunikationsinformationen und/oder Autorisierungsinformationen in dem Zonensteuergerät und/oder in den Komponenten des Zonenmoduls aktualisiert werden.

Das Verfahren kann ferner, bei einer erfolgreichen fahrzeugseitigen Autorisierung des Zonenmoduls und/oder einer erfolgreichen zonenmodulseitigen Autorisierung des Zonenmoduls, ein Anschalten einer Stromversorgung des Zonenmoduls durch ein für ein anderes Zonenmodul vorgesehenes weiteres Zonensteuergerät umfassen.

Das Verfahren kann ferner ein Überwachen einer Leistungsverteilung in dem Zonenmodul umfassen. Das Verfahren kann ferner ein Abschließen einer Prüfung der Komponenten des Zonenmoduls umfassen. Das Verfahren kann ferner ein Abschließen eines Flashvorgangs der Komponenten des Zonenmoduls umfassen.

Das Verfahren kann ferner ein Durchführen eines lokalen Diagnosevorgangs zur Prüfung von Komponenten eines weiteren (zweiten) Zonenmoduls umfassen. Insbesondere kann das Verfahren ein Durchführen eines lokalen Diagnosevorgangs zur Prüfung von Komponenten einer Vielzahl von Zonenmodulen umfassen.

Anders ausgedrückt, das oben beschrieben Verfahren gemäß dem zweiten Aspekt ist nicht auf die Anwendung auf ein einziges Zonenmodul beschränkt. Hingegen kann mit dem Verfahren eine Vielzahl von Zonenmodulen eines Bordnetzes eines Fahrzeugs initialisiert werden. Beispielsweise kann ein erstes Zonensteuergerät eines ersten Zonenmoduls einen lokalen Diagnosevorgang zur Prüfung von Komponenten des ersten Zonenmoduls durchführen. Zumindest teilweise, beispielsweise zumindest nahezu vollständig, parallel hierzu oder anschließend kann ein zweites Zonensteuergerät eines zweiten Zonenmoduls einen lokalen Diagnosevorgang zur Prüfung von Komponenten des zweiten Zonenmoduls durchführen. Zumindest teilweise, beispielsweise zumindest nahezu vollständig, parallel hierzu oder anschließend kann ein drittes Zonensteuergerät eines dritten Zonenmoduls einen lokalen Diagnosevorgang zur Prüfung von Komponenten des dritten Zonenmoduls durchführen. Dies kann beliebig fortgeführt werden.

Zumindest eine Teilmenge der Vielzahl von Zonenmodulen kann zumindest teilweise parallel zueinander oder nacheinander in das Fahrzeug eingebaut werden. Im Anschluss kann der oben beschrieben Initialisierungsvorgang zur Initialisierung der Komponenten der Vielzahl von Zonenmodulen durch eine fahrzeugseitig vorgesehene Rechnervorrichtung zumindest teilweise parallel zueinander oder nacheinander durchgeführt werden.

Auf die beschriebene Weise kommt es zu einer erheblichen Vereinfachung und/oder Beschleunigung bei der Montage einer Vielzahl von Zonenmodulen in ein Fahrzeug.

Auch wenn einige der voranstehend beschriebenen Aspekte in Bezug auf das System gemäß dem ersten Aspekt beschrieben wurden, so können diese Aspekte auch in entsprechender Weise in dem Verfahren gemäß dem zweiten Aspekt realisiert sein/werden und umgekehrt.

Die vorliegende Offenbarung soll weiter anhand von Figuren erläutert werden. Diese Figuren zeigen schematisch:
- Figur 1: ein Ausführungsbeispiels eines Systems zur Initialisierung eines Zonenmoduls eines Bordnetzes eines Fahrzeugs;
- Figur 2: ein Ausführungsbeispiel eines Verfahrens zur Initialisierung eines Zonenmoduls eines Bordnetzes eines Fahrzeugs;
- Figur 3: mögliche Details des Systems aus Figur 1;
- Figur 4: eine mögliche Ausgestaltung einer zonenbasierten Architektur, in der das System und das Verfahren aus Figuren 1 und 2 einsetzbar sind; und
- Figur 5: ein schematische Darstellung eines Fahrzeugs, in dem das System und das Verfahren aus Figuren 1 und 2 einsetzbar sind.

Im Folgenden werden, ohne hierauf beschränkt zu sein, spezifische Details dargelegt, um ein vollständiges Verständnis der vorliegenden Offenbarung zu liefern. Es ist einem Fachmann jedoch klar, dass die vorliegende Offenbarung in anderen Ausführungsbeispielen verwendet werden kann, die von den nachfolgend dargelegten Details abweichen können. Beispielsweise werden im Folgenden spezifische Konfigurationen und Ausgestaltungen eines Systems beschrieben, die nicht als einschränkend anzusehen sind. Auch wenn die nachstehend beschriebenen Aspekte in Bezug auf ein System beschrieben wurden, so können diese Aspekte auch in entsprechender Weise in einem Verfahren realisiert sein/werden und umgekehrt.

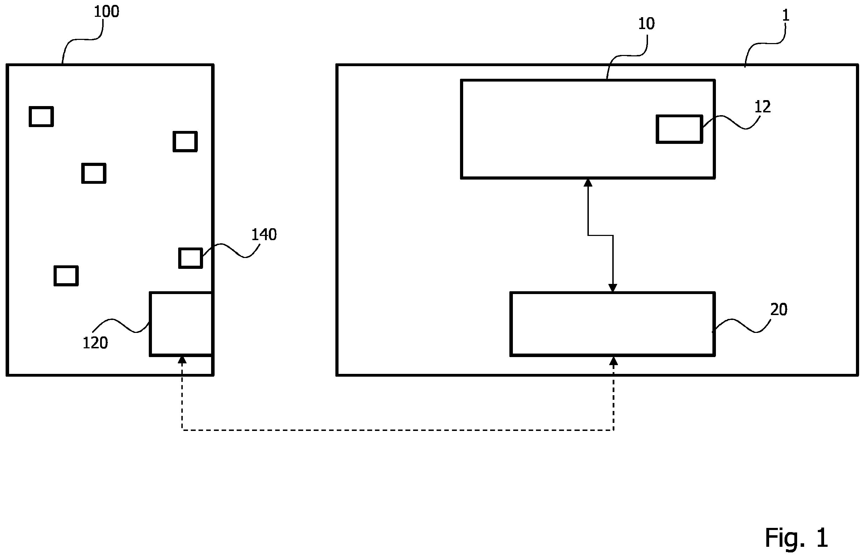

Figur 1 zeigt ein Ausführungsbeispiel eines Systems zur Initialisierung eines Zonenmoduls 100 eines Bordnetzes eines Fahrzeugs 1. Das System weist ein für das Zonenmodul 100 vorgesehenes Zonensteuergerät 120 auf. Das Zonensteuergerät 120 ist beispielhaft in Figur 1 in dem Zonenmodul 100 angeordnet. Das Zonensteuergerät 120 kann auch außerhalb des Zonenmoduls 100 angeordnet ist, solange es dem Zonenmodul 100 funktional zugeordnet ist. In Figur 1 sind beispielhaft fünf Komponenten 140 gezeigt, um zu verdeutlichen, dass jede Anzahl an Komponenten in dem Zonenmodul 100 angeordnet sein kann, wobei nur eine einzige Komponente 140 der Übersichtlichkeit halber mit einem Bezugszeichen versehen ist. Die Komponenten 140 können jeweils als Steuergeräte, beispielsweise Electronic Controls Units (ECUs) oder Sensoren oder Aktuatoren, ausgebildet sein. Das Zonensteuergerät 120 kann mit einer Teilmenge oder allen der Komponenten 140 direkt oder indirekt verbunden sein. Die Komponenten 140 können teilweise untereinander vernetzt sein. Die Komponenten 140 können zu einer gleichen oder zu unterschiedlichen Domänen gehören. Rein beispielhaft seien Sensoren und/oder Aktuatoren für verschiedene Fahrzeugfunktionen, wie beispielsweise Fahrzeugleuchten, Scheibenwischer, Tür-/Fenstersteuerungen und Motorsteuerungen genannt. Die in einem Zonenmodul 100 vorhandenen Komponenten 140 können, müssen aber nicht, verschiedenen Funktionen zugeordnet sein, beispielsweise dem Antriebsstrang, der Karosserie oder dem Komfort.

In Figur 1 ist ferner schematisch ein Fahrzeug 1 gezeigt. Das System weist eine fahrzeugseitig vorgesehene Rechnervorrichtung 20 auf. Die Rechnervorrichtung 20 kann als ein Hochleistungsrechner (auf Englisch: High Performance Computer (HPC)) ausgebildet sein. In dem Fahrzeug 1 ist ferner ein weiteres Zonenmodul 10 angeordnet, das bereits in das Fahrzeug 1 eingebaut wurde. Bei dem Zonenmodul 10 handelt es sich um ein herkömmliches Zonenmodul 10 samt herkömmlichem Zonensteuergerät 12.

Generell ist eine klare Definition samt dauerhaften formalen Kriterien eines Hochleistungsrechners (HPC) und insbesondere eine Unterscheidung eines HPCs von anderen Rechnern aufgrund der schnellen Entwicklung der Rechentechnik/Rechnertechnik schwierig. Es ist aber allgemein anerkannt, dass Rechner, die zur Durchführung von Rechenanwendungen in der Lage sind, deren Komplexität oder Umfang eine Berechnung auf einfach Arbeitsplatzrechnern unmöglich oder zumindest unsinnig macht, als HPCs bezeichnet werden können. Ferner kann als ein Merkmal eines HPCs eine auf parallele Verarbeitung ausgerichtete Architektur darstellen. Gegenwärtig zählt man insbesondere die Computer der Teraflops-Leistungsklasse und darüber zu den Hochleistungsrechnern.

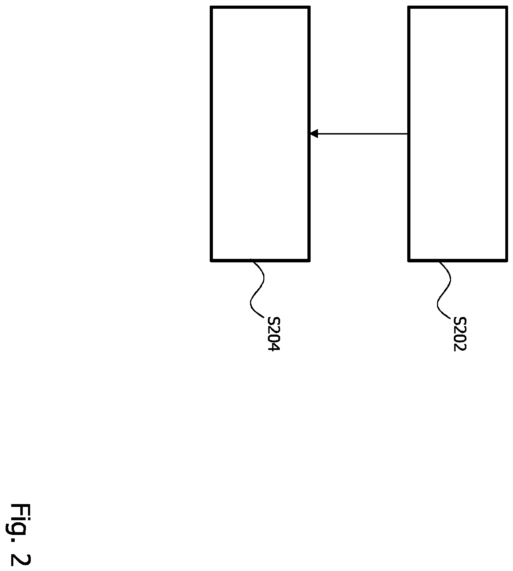

Bezugnehmend auf Figur 1 und Figur 2 ist das Zonensteuergerät 120 ausgebildet, einen lokalen Diagnosevorgang zur Prüfung, beispielsweise zur Vorprüfung, von Komponenten 140 des Zonenmoduls 100 durchzuführen (Schritt S202). Die Rechnervorrichtung 20 ist ausgebildet, in einem in das Fahrzeug 1 eingebauten Zustand des Zonenmoduls 100, einen Initialisierungsvorgang zur Initialisierung der Komponenten 140 des Zonenmoduls 100 zu initiieren (Schritt S204).

In dem lokalen Diagnosevorgang kann das Zonensteuergerät 120 prüfen, ob die richtigen Komponenten 140, beispielsweise die richtigen ECUs, in das Zonenmodul 100 integriert sind. Hierfür kann das Zonensteuergerät 120 beispielsweise die Seriennummer und/oder das Software-Release und/oder Kommunikationseinstellungen der Komponenten 140, beispielsweise der ECUs, prüfen. Zusätzlich oder alternativ können die Sensoren und/oder Aktuatoren des Zonenmoduls 100 geprüft werden.

Das Zonensteuergerät 120 kann den lokalen Diagnosevorgang bereits vor dem Einbau des Zonenmoduls 100 in das Fahrzeug 1 durchführen. Das heißt, bereits in dem Zustand aus Figur 1, in dem das Zonenmodul 100 noch nicht in das Fahrzeug 1 eingebaut, sondern lediglich selbst fertiggestellt ist, kann das Zonensteuergerät 120 initialisiert sein und eine Prüfung, beispielsweise eine Vorprüfung, der Komponenten 140 durchführen. Das Zonenmodul 100 kann nach einem erfolgreichen lokalen Diagnosevorgang (nach einer erfolgreichen lokalen Diagnose) bereits lokal geprüft in das Fahrzeug 100 eingebaut werden. Eine weitere lokale Prüfung des Zonenmoduls 100 in dem eingebauten Zustand kann dann entfallen oder nur in verringerter Form durchgeführt werden. In Folge wird der Zusammenbau des Fahrzeugs 1 beschleunigt.

Alternativ kann das Zonensteuergerät 120 nach dem Einbau des Zonenmoduls 100 in das Fahrzeug 1, beispielsweise unmittelbar nach dem Einbau des Zonenmoduls 100 in das Fahrzeug 1, den lokalen Diagnosevorgang durchführen. Auch in diesem Fall wird die lokale Diagnose vor Fertigstellung der Komplettmontage des Fahrzeugs 1 durchgeführt. Das Fahrzeug 1 muss nicht erst strukturell fertiggestellt werden, bevor weitere Prüfungsvorgänge durchgeführt werden können. Daher kommt es auch in diesem Fall zu einer Zeitersparnis bei der Fertigung.

Nach dem Einbau und der lokalen Prüfung des Zonenmoduls 100, vor oder nach dem Einbau des Zonenmoduls 100, wird der Initialisierungsvorgang durch die Rechnervorrichtung 20 gestartet. Beispielhaft wird im Folgenden davon ausgegangen, dass die Rechnervorrichtung 20 als HPC ausgebildet ist, so dass die Rechnervorrichtung im Folgenden auch als HPC 20 bezeichnet wird.

Gemäß einem ersten Beispiel initiiert der HPC 20 den Initialisierungsvorgang, indem er ein für ein anderes Zonenmodul, beispielsweise ein für das Zonenmodul 10, vorgesehenes weiteres Zonensteuergerät 12 instruiert, das Zonensteuergerät 120 mit Strom zu versorgen und/oder eine Kommunikation mit dem Zonensteuergerät 120 zu starten. Hierfür kann der HPC 20 eine Power over Ethernet Technologie verwenden.

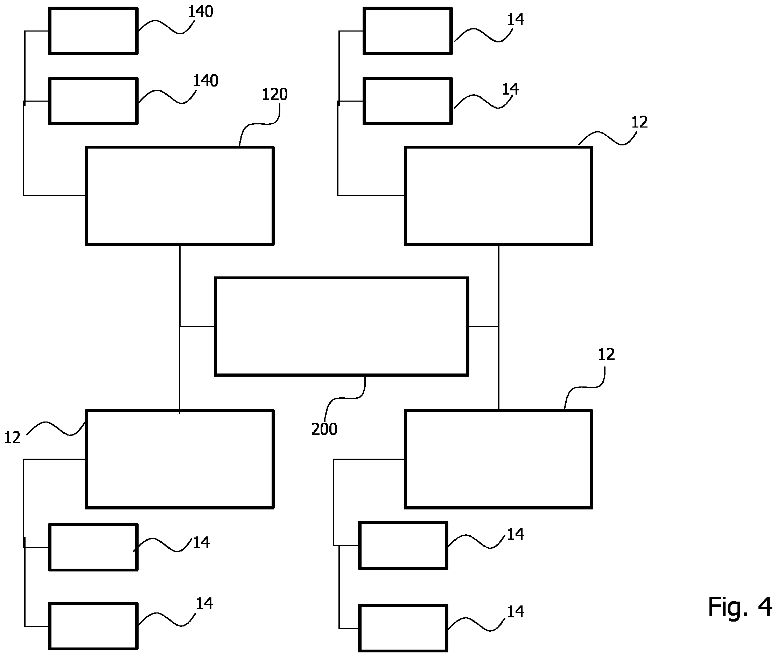

Gemäß einem zweiten Beispiel initiiert der HPC 20 den Initialisierungsvorgang, indem er ein lokales Gateway (siehe Figur 4) instruiert, das Zonensteuergerät 120 mit Strom zu versorgen und/oder eine Kommunikation mit dem Zonensteuergerät 120 zu starten. Hierfür kann der HPC 20 eine Power over Ethernet Technologie verwenden.

Gemäß einem dritten Beispiel startet der HPC 20 selbst eine Kommunikation mit dem Zonensteuergerät 120. Zu diesem Zwecke kann der HPC 20 eine Vorsicherungsbox des Fahrzeugs informieren oder instruieren, sich anzuschalten. Dadurch kann eine Stromversorgung über die Vorsicherungsbox sichergestellt werden.

in dem Initialisierungsvorgang werden Kommunikationsinformationen und/oder Autorisierungsinformationen in dem Zonensteuergerät 120 und/oder in den Komponenten 140 des Zonenmoduls 100 aktualisiert. Auch weitere Aktualisierungen können durchgeführt werden.

Bei einer erfolgreichen fahrzeugseitigen Autorisierung des Zonenmoduls 100 und/oder einer erfolgreichen zonenmodulseitigen Autorisierung des Zonenmoduls 100 kann anschließend ein für ein anderes Zonenmodul vorgesehenes weiteres Zonensteuergerät, beispielsweise das für das Zonenmodul 10 vorgesehene Zonensteuergerät 12, eine Stromversorgung des Zonenmoduls 100 anschalten, beispielsweise eine dauerhafte Stromversorgung des Zonenmoduls 100.

Ferner kann in dem Initialisierungsvorgang die Leistungsverteilung in dem Zonenmodul 100 überwacht werden. Zudem kann eine Prüfung der Komponenten 140 des Zonenmoduls 100 abgeschlossen werden. Zudem kann ein Flashvorgang der Komponenten 140 des Zonenmoduls 100 abgeschlossen werden.

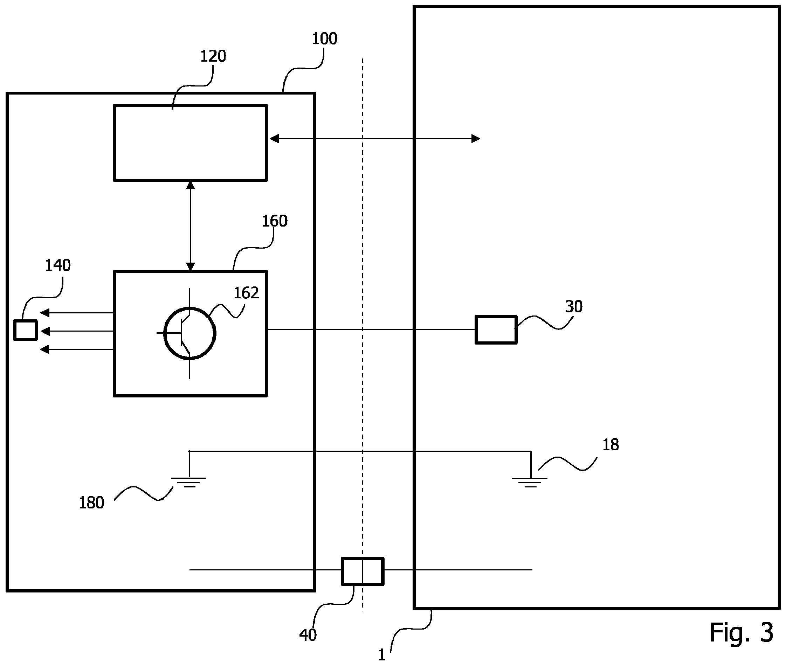

Weitere Details werden nun in Bezug auf Figur 3 beschrieben. In Figur 3 wird angenommen, dass das Zonenmodul 100, beispielsweise als ein Cockpit-Moduls, in das Fahrzeug 1 eingebaut wurde. Der Einbauvorgang umfasst einen mechanischen Einbau des Zonenmoduls 100 in das Fahrzeug 1 und anschließend die elektrische Verbindung mit einer Stromversorgung 30. Zudem kann bei dem Einbau eine Erdung über die jeweiligen Massepunkte erfolgen, d. h. den Massepunkt 180 des Zonenmoduls und des Massepunkt 18 des Fahrzeugs 1. Zudem kann eine Kommunikationsverbindung zwischen dem Fahrzeug 1 und dem Zonensteuergerät 120 hergestellt werden, wie durch den Pfeil zwischen dem Zonensteuergerät 120 und dem Fahrzeug 1 illustriert. Zudem kann es zwischen den Rest-Bordnetzen / den Rest-Kabelbäumen des Fahrzeugs 1 und dem Zonenmodul 100 eine optionale Verbindung zu einem Inline-Konnektor 40 geben.

Das Zonensteuergerät 120 hat eine Schnittstelle zu einem Leistungsversorgungsteil 160, wie durch den Pfeil zwischen dem Zonensteuergerät 120 und dem Leistungsversorgungsteil 160 illustriert. Das Leistungsversorgungsteil 160 kann sich innerhalb oder außerhalb des Zonenmoduls 100 befinden. Das Leistungsversorgungsteil 160 weist eine Schaltvorrichtung 162 auf, um die Komponenten 140 in dem Zonenmodul 140 mit Strom/Leistung zu versorgen, wie dies durch die von dem Leistungsversorgungsteil 160 abgehenden Pfeile angedeutet wird. Schaltet der Schalter 162 durch (d. h. ist der Schalter geschlossen), dann können die Komponenten 140 von dem Leistungsversorgungsteil 160 mit Strom versorgt werden. Ist der Schalter 162 offen, so ist eine Stromversorgung der Komponenten 140 durch das Leistungsversorgungsteil 160 nicht möglich. Bei dem Schalter 162 kann es sich insbesondere um einen Halbleiterschalter handeln, wie in der Figur 4 angedeutet. Der Schalter 162 wird gemäß Instruktionen von dem Zonensteuergerät 120 geschaltet. Durch das über das Zonensteuergerät 120 steuerbare Leistungsversorgungsteil 160 wird eine zumindest geringe Energieversorgung in dem Zonenmodul 100 bereitgestellt. Auf diese Weise wird ermöglicht, dass das Zonenmodul 100 eine lokale Diagnose nach dem eigenen Zusammenbau durchführen kann und hierfür nicht erst in das Fahrzeug 1 eingebaut werden muss.

In Figur 4 wird schematisch illustriert, wie das Zonensteuergerät 120 in eine zonenbasierte Architektur eines Bordnetzes eines Fahrzeugs eingefügt werden kann. Die zonenbasierte Architektur aus Figur 4 ist stark vereinfach dargestellt. Das Zonensteuergerät 120 ist mit mehreren Komponenten 140 verbunden. Das Zonensteuergerät 120 ist mit einem Gateway 200 verbunden. Das Gateway kann wiederum mit dem HPC 20 verbunden sein, welcher der Einfachheit halber in Figur 4 nicht gezeigt ist. Das Gateway 200 ist ferner mit mehreren weiteren Zonensteuergeräten 12 verbunden, genauer gesagt beispielhaft mit drei weiteren Zonensteuergeräten 12. Jedes der drei Zonensteuergeräte 12 ist jeweils mit mehreren Komponenten 14 verbunden. Das Zonensteuergerät 120 und die mit dem Zonensteuergerät 120 verbundenen Komponenten 140 sind in einer ersten Zone des Fahrzeugs angeordnet. Die weiteren Zonensteuergeräte 12 und die mit diesen jeweils verbundenen Komponenten 14 sind jeweils in anderen Zonen angeordnet, beispielsweise in einer zweiten bis vierten Zone des Fahrzeugs 1.

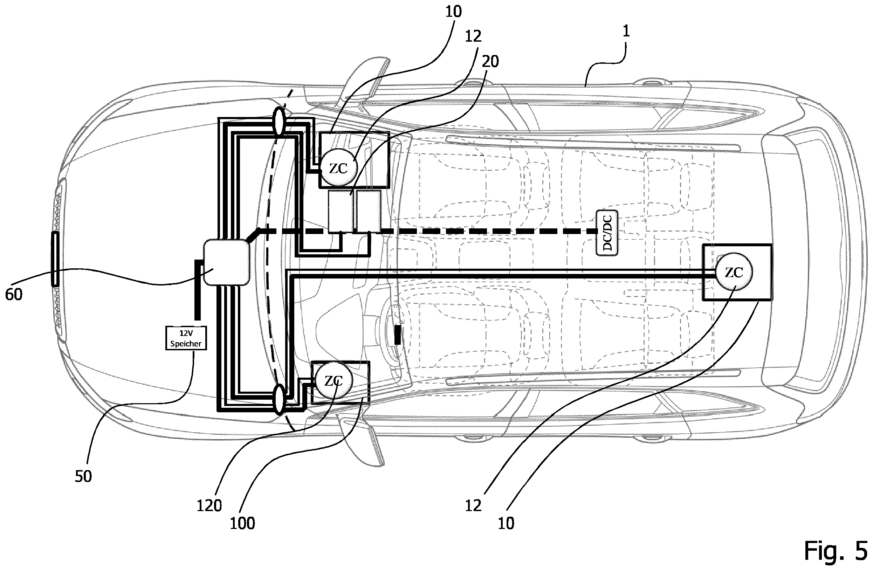

In Figur 5 wird eine Einbau eines Zonenmoduls 100 mit einem Zonensteuergerät 120 in ein Fahrzeug 1 schematisch dargestellt. Beispielhaft wird angenommen, dass bereits zwei Zonenmodule 10 jeweils mit einem Zonensteuergerät 12 in das Fahrzeug 1 eingebaut wurden. In dem Fahrzeug 1 existiert während des Fertigungsprozesses bereits eine niedrige Spannungsversorgung 50, beispielsweise über die Fahrzeugbatterie. In dem gezeigten Beispiel liegt diese niedrige Spannungsversorgung bei 12 V. Alternativ sind beispielsweise auch 48 V möglich. Ferner existiert bereits eine aktive Kommunikationsverbindung zwischen dem HPC 20 und den weiteren Zonensteuergeräten 12. Ferner ist in dem gezeigten Beispiel dem HPC 20 die Fahrzeugkonfiguration bekannt.

Wie beschrieben, kann das Zonensteuergerät 120 in zwei Modi arbeiten. In dem ersten Modus ist das Zonensteuergerät 120 bereits am Ende des Zusammenbaus des Zonenmoduls 100 initialisiert. In dem zweiten Modus ist das Zonensteuergerät 120 am Ende oder nach dem Einbau des Zonenmoduls 100 in das Fahrzeug initialisiert. In dem ersten Modus kann das Zonensteuergerät 120 einen lokalen Diagnosevorgang ausführen, bevor das Zonenmodul 100 in das Fahrzeug 1 eingebaut wird. In dieser lokalen Diagnose kann das Zonenmodul 100 geprüft werden. Insbesondere kann validiert werden, dass/ob das Zonenmodul 100 fehlerfrei ist und somit ein fehlerfreies Zonenmodul 100 in das Fahrzeug 1 eingebaut werden kann. Während der Prüfung können andere Fertigungsschritte vollzogen werden, wie beispielsweise der Einbau eines anderen geprüften oder ungeprüften Zonenmoduls 100. In dem zweiten Modus wird das ungeprüfte Zonenmodul 100 in das Fahrzeug eingebaut. Nach dem Einbau kann das Zonenmodul 100 angeschaltet und durch das Zonensteuergerät 120 lokal geprüft werden. Während der Prüfung können andere Fertigungsschritte vollzogen werden, wie beispielsweise der Einbau oder die Prüfung eines weiteren Zonenmoduls 100.

Nachfolgend wird, ohne darauf beschränkt zu sein, angenommen, dass das Zonensteuergerät 120 in dem ersten Modus arbeitet. Das heißt, das Zonenmodul 100 wird zusammengebaut und am Ende oder nach dem Zusammenbau des Zonenmoduls 100 ist das Zonensteuergerät 120 initialisiert. Nach erfolgreicher lokaler Diagnose wird das Zonenmodul 100 in das Fahrzeug 1 eingebaut.

Während des Einbaus des Zonenmoduls 100 in das Fahrzeug 1 ist das Zonenmodul 100 ausgeschaltet. Auf diese Weise werden Gefahren und/oder Beschädigungen durch Elektrizität vermieden. Sobald der mechanische und elektrische Einbauvorgang des Zonenmoduls 100 abgeschlossen ist, kann der HPC 20, beispielsweise angewiesen durch einen Bediener oder Monteur, informiert werden, dass das nächste Modul, nämlich das Zonenmodul 100, für die Initialisierung bereitsteht. Ferner kann dem HPC mitgeteilt werden, ob das Zonenmodul 100 bereits lokal geprüft wurde. In diesem Fall wird der HPC 20 direkt mit dem Initialisierungsvorgang starten. Alternativ kann der HPC 20 bestimmen, ob das Zonenmodul 10 bereits lokal geprüft wurde. In diesem Fall wird der HPC 20 direkt mit dem Initialisierungsvorgang starten. Stellt der HPC 20 hingegen fest, dass das Zonenmodul 100 noch nicht lokal geprüft wurde, wird der HPC 20 zunächst noch nicht den Initialisierungsvorgang durchführen. Beispielsweise kann der HPC 20 abwarten, bis er von dem Zonenmodul 100 die Mitteilung erhält, dass die lokale Diagnose erfolgreich abgeschlossen wurde, oder der HPC 20 kann wiederholt, beispielsweise in regelmäßigen Zeitabständen, prüfen, ob der lokale Diagnosevorgang des Zonenmoduls 100 erfolgreich abgeschlossen wurde.

Der HPC 20 kann für die Initiierung des Initialisierungsvorgangs auf verschiedene Weise vorgehen. Gemäß einer ersten Option kann der HPC 20 ein weiteres Zonensteuergerät 12, beispielsweise das zu dem Zonensteuergerät 120 nächstgelegene Zonensteuergerät 12, informieren oder instruieren, eine Kommunikation mit dem Zonensteuergerät 120 zu starten. Zudem kann der HPC 20 das weitere Zonensteuergerät 12 informieren oder instruieren, das Zonensteuergerät 120 über Power over Ethernet mit Strom zu versorgen.

Gemäß einer zweiten Option kann der HPC 20 das lokale Gateway 200 (siehe Figur 4) informieren oder instruieren, eine Kommunikation mit dem Zonensteuergerät 120 zu starten. Zudem kann der HPC 20 das lokale Gateway 200 informieren oder instruieren, das Zonensteuergerät 120 über Power over Ethernet mit Strom zu versorgen.

Gemäß einer dritten Option kann der HPC 20 eine Vorsicherungsbox / einen Vorsicherungskasten 60 des Fahrzeugs 1 informieren oder instruieren, sich anzuschalten. In diesem Fall kann der HPC 20 direkt mit dem Zonensteuergerät 120 kommunizieren.

Nach der Prüfung des Manifests des (neuen) Zonensteuergeräts 120 in dem (neuen) Zonenmodul 100 werden die Kommunikation und alle Autorisierungen aktualisiert.

Nachdem sowohl von der Fahrzeugseite (richtiges Zonenmodul 100 ist am richtigen Platz/Ort) als auch von der Modulseite (kein bekannter Fehler im Zonenmodul 100) die Autorisierung gegeben wurde, kann eines der weiteren Zonensteuergeräte 12, beispielsweise das nächste Zonensteuergerät 12 zu dem Zonensteuergerät 120, die Stromversorgung anschalten, damit Strom / Energie zu dem neuen Zonenmodul 100 transferiert werden kann.

Das (neue) Zonensteuergerät 120 kann anschließend die Leistungsverteilung in seinem Zonenmodul 100 überwachen. Ferner kann das Zonensteuergerät 120 die Diagnose / Prüfung relevanter Komponenten 140 sowie das Flashen relevanter Komponenten 140 abschließen. Das Zonenmodul 100 ist nun in die Fahrzeugarchitektur vollständig integriert. Während der zuvor beschriebenen Vorgänge ist es zudem jederzeit möglich, dass ein weiteres Zonensteuergerät 120 einen lokalen Diagnosevorgang durchführt. Dies führt wiederum zu einer Flexibilisierung der Fahrzeugmontage sowie zu einer Verkürzung der Fertigungsdauer.

## Patentansprüche

1. System zur Initialisierung eines Zonenmoduls (100) eines Bordnetzes eines Fahrzeugs (1), wobei das System aufweist:
ein für das Zonenmodul (100) vorgesehenes Zonensteuergerät (120), das ausgebildet ist, einen lokalen Diagnosevorgang zur Prüfung von Komponenten (140) des Zonenmoduls (100), insbesondere von Steuergeräten und/oder Sensoren und/oder Aktuatoren des Zonenmoduls (100), durchzuführen; und
eine fahrzeugseitig vorgesehene Rechnervorrichtung (20), insbesondere einen Hochleistungsrechner, die ausgebildet ist, in einem in das Fahrzeug (1) eingebauten Zustand des Zonenmoduls (100), einen Initialisierungsvorgang zur Initialisierung der Komponenten (140) des Zonenmoduls (100) zu initiieren.

2. System nach Anspruch 1, wobei das Zonensteuergerät (120) ausgebildet ist, den lokalen Diagnosevorgang vor dem Einbau des Zonenmoduls (100) in das Fahrzeug (1) durchzuführen und/oder den lokalen Diagnosevorgang nach dem Einbau des Zonenmoduls (100) in das Fahrzeug (1) durchzuführen.

3. System nach Anspruch 1 oder 2, wobei die Rechnervorrichtung (20) zur Initiierung des Initialisierungsvorgangs ausgebildet ist:
ein für ein anderes Zonenmodul (10) vorgesehenes weiteres Zonensteuergerät (12) zu instruieren, das Zonensteuergerät (120) mit Strom zu versorgen und/oder eine Kommunikation mit dem Zonensteuergerät (120) zu starten, insbesondere unter Verwendung einer Power over Ethernet Technologie; und/oder
ein lokales Gateway zu instruieren, das Zonensteuergerät (120) mit Strom zu versorgen und/oder eine Kommunikation mit dem Zonensteuergerät (120) zu starten, insbesondere unter Verwendung einer Power over Ethernet Technologie; und/oder
selbst eine Kommunikation mit dem Zonensteuergerät (120) zu starten.

4. System nach einem der Ansprüche 1 bis 3, wobei in dem Initialisierungsvorgang Kommunikationsinformationen und/oder Autorisierungsinformationen in dem Zonensteuergerät (120) und/oder in den Komponenten (140) des Zonenmoduls (100) aktualisiert werden.

5. System nach einem der Ansprüche 1 bis 4, wobei ein für ein anderes Zonenmodul (10) vorgesehenes weiteres Zonensteuergerät (12) ausgebildet ist, bei einer erfolgreichen fahrzeugseitigen Autorisierung des Zonenmoduls (100) und/oder einer erfolgreichen zonenmodulseitigen Autorisierung des Zonenmoduls (100), eine Stromversorgung des Zonenmoduls (100) anzuschalten.

6. System nach einem der Ansprüche 1 bis 5, wobei das Zonensteuergerät (120) ausgebildet ist, in dem Initialisierungsvorgang, die Leistungsverteilung in dem Zonenmodul (100) zu überwachen und/oder eine Prüfung der Komponenten (140) des Zonenmoduls (100) abzuschließen und/oder einen Flashvorgang (140) der Komponenten des Zonenmoduls (100) abzuschließen.

7. Verfahren zur Initialisierung eines Zonenmoduls (100) eines Bordnetzes eines Fahrzeugs (1), wobei das Verfahren umfasst:
Durchführen eines lokalen Diagnosevorgangs zur Prüfung von Komponenten (140) des Zonenmoduls (100), insbesondere von Steuergeräten und/oder Sensoren und/oder Aktuatoren des Zonenmoduls (100), durch ein für das Zonenmodul (100) vorgesehenes Zonensteuergerät (120); und
Initiieren, in einem in das Fahrzeug (1) eingebauten Zustand des Zonenmoduls (100), eines Initialisierungsvorgangs zur Initialisierung der Komponenten (140) des Zonenmoduls (100) durch eine fahrzeugseitig vorgesehene Rechnervorrichtung (20).

8. Verfahren nach Anspruch 7, wobei der lokale Diagnosevorgang vor dem Einbau des Zonenmoduls (100) in das Fahrzeug (1) durchgeführt wird und/oder nach dem Einbau des Zonenmoduls (100) in das Fahrzeug (1) durchgeführt wird.

9. Verfahren nach Anspruch 7 oder 8, wobei das Initiieren des Initialisierungsvorgangs umfasst:
Instruieren, durch die Rechnervorrichtung (20), eines für ein anderes Zonenmodul (10) vorgesehenen weiteren Zonensteuergeräts (12), das Zonensteuergerät (120) mit Strom zu versorgen und/oder eine Kommunikation mit dem Zonensteuergerät (120) zu starten, insbesondere unter Verwendung einer Power over Ethernet Technologie; oder
Instruieren, durch die Rechnervorrichtung (20), eines lokalen Gateways, das Zonensteuergerät (120) mit Strom zu versorgen und/oder eine Kommunikation mit dem Zonensteuergerät (120) zu starten, insbesondere unter Verwendung einer Power over Ethernet Technologie; oder
Starten, durch die Rechnervorrichtung (20), einer Kommunikation mit dem Zonensteuergerät (120).

10. Verfahren nach einem der Ansprüche 7 bis 9, wobei in dem Initialisierungsvorgang Kommunikationsinformationen und/oder Autorisierungsinformationen in dem Zonensteuergerät (120) und/oder in den Komponenten (140) des Zonenmoduls (100) aktualisiert werden.

11. Verfahren nach einem der Ansprüche 7 bis 10, wobei das Verfahren ferner umfasst:
bei einer erfolgreichen fahrzeugseitigen Autorisierung des Zonenmoduls (100) und/oder einer erfolgreichen zonenmodulseitigen Autorisierung des Zonenmoduls (100), Anschalten einer Stromversorgung des Zonenmoduls (1009 durch ein für ein anderes Zonenmodul (10) vorgesehenes weiteres Zonensteuergerät (12).

12. Verfahren nach einem der Ansprüche 7 bis 11, wobei das Verfahren ferner umfasst:
Überwachen einer Leistungsverteilung in dem Zonenmodul (100) und/oder
Abschließen einer Prüfung der Komponenten (140) des Zonenmoduls (100);
und/oder
Abschließen eines Flashvorgangs der Komponenten (140) des Zonenmoduls (100).

13. Verfahren nach einem der Ansprüche 7 bis 12, wobei das Verfahren ein Durchführen eines lokalen Diagnosevorgangs zur Prüfung von Komponenten (140) einer Vielzahl von Zonenmodulen (100) durch ein für das jeweilige Zonenmodul (100) der Vielzahl von Zonenmodulen (100) vorgesehenes Zonensteuergerät (120) umfasst.

## Geänderte Patentansprüche

### Geänderte Patentansprüche gemäss Regel 137(2) EPÜ.

1. System zur Initialisierung eines Zonenmoduls (100) eines Bordnetzes eines Fahrzeugs (1), wobei das System aufweist:
ein für das Zonenmodul (100) vorgesehenes Zonensteuergerät (120), das ausgebildet ist, einen lokalen Diagnosevorgang zur Prüfung von Komponenten (140) des Zonenmoduls (100), insbesondere von Steuergeräten und/oder Sensoren und/oder Aktuatoren des Zonenmoduls (100), durchzuführen, wobei das Zonensteuergerät (120) ausgebildet ist, den lokalen Diagnosevorgang vor dem Einbau des Zonenmoduls (100) in das Fahrzeug (1) durchzuführen; und
eine fahrzeugseitig vorgesehene Rechnervorrichtung (20), insbesondere einen Hochleistungsrechner, die ausgebildet ist, in einem in das Fahrzeug (1) eingebauten Zustand des Zonenmoduls (100), einen Initialisierungsvorgang zur Initialisierung der Komponenten (140) des Zonenmoduls (100) zu initiieren.

2. System nach Anspruch 1, wobei das Zonensteuergerät (120) ausgebildet ist, den lokalen Diagnosevorgang nach dem Einbau des Zonenmoduls (100) in das Fahrzeug (1) durchzuführen.

3. System nach Anspruch 1 oder 2, wobei die Rechnervorrichtung (20) zur Initiierung des Initialisierungsvorgangs ausgebildet ist:
ein für ein anderes Zonenmodul (10) vorgesehenes weiteres Zonensteuergerät (12) zu instruieren, das Zonensteuergerät (120) mit Strom zu versorgen und/oder eine Kommunikation mit dem Zonensteuergerät (120) zu starten, insbesondere unter Verwendung einer Power over Ethernet Technologie; und/oder
ein lokales Gateway zu instruieren, das Zonensteuergerät (120) mit Strom zu versorgen und/oder eine Kommunikation mit dem Zonensteuergerät (120) zu starten, insbesondere unter Verwendung einer Power over Ethernet Technologie; und/oder
selbst eine Kommunikation mit dem Zonensteuergerät (120) zu starten.

4. System nach einem der Ansprüche 1 bis 3, wobei in dem Initialisierungsvorgang Kommunikationsinformationen und/oder Autorisierungsinformationen in dem Zonensteuergerät (120) und/oder in den Komponenten (140) des Zonenmoduls (100) aktualisiert werden.

5. System nach einem der Ansprüche 1 bis 4, wobei ein für ein anderes Zonenmodul (10) vorgesehenes weiteres Zonensteuergerät (12) ausgebildet ist, bei einer erfolgreichen fahrzeugseitigen Autorisierung des Zonenmoduls (100) und/oder einer erfolgreichen zonenmodulseitigen Autorisierung des Zonenmoduls (100), eine Stromversorgung des Zonenmoduls (100) anzuschalten.

6. System nach einem der Ansprüche 1 bis 5, wobei das Zonensteuergerät (120) ausgebildet ist, in dem Initialisierungsvorgang, die Leistungsverteilung in dem Zonenmodul (100) zu überwachen und/oder eine Prüfung der Komponenten (140) des Zonenmoduls (100) abzuschließen und/oder einen Flashvorgang (140) der Komponenten des Zonenmoduls (100) abzuschließen.

7. Verfahren zur Initialisierung eines Zonenmoduls (100) eines Bordnetzes eines Fahrzeugs (1), wobei das Verfahren umfasst:
Durchführen eines lokalen Diagnosevorgangs zur Prüfung von Komponenten (140) des Zonenmoduls (100), insbesondere von Steuergeräten und/oder Sensoren und/oder Aktuatoren des Zonenmoduls (100), durch ein für das Zonenmodul (100) vorgesehenes Zonensteuergerät (120), wobei der lokale Diagnosevorgang vor dem Einbau des Zonenmoduls (100) in das Fahrzeug (1) durchgeführt wird; und
Initiieren, in einem in das Fahrzeug (1) eingebauten Zustand des Zonenmoduls (100), eines Initialisierungsvorgangs zur Initialisierung der Komponenten (140) des Zonenmoduls (100) durch eine fahrzeugseitig vorgesehene Rechnervorrichtung (20).

8. Verfahren nach Anspruch 7, wobei der lokale Diagnosevorgang nach dem Einbau des Zonenmoduls (100) in das Fahrzeug (1) durchgeführt wird.

9. Verfahren nach Anspruch 7 oder 8, wobei das Initiieren des Initialisierungsvorgangs umfasst:
Instruieren, durch die Rechnervorrichtung (20), eines für ein anderes Zonenmodul (10) vorgesehenen weiteren Zonensteuergeräts (12), das Zonensteuergerät (120) mit Strom zu versorgen und/oder eine Kommunikation mit dem Zonensteuergerät (120) zu starten, insbesondere unter Verwendung einer Power over Ethernet Technologie; oder
Instruieren, durch die Rechnervorrichtung (20), eines lokalen Gateways, das Zonensteuergerät (120) mit Strom zu versorgen und/oder eine Kommunikation mit dem Zonensteuergerät (120) zu starten, insbesondere unter Verwendung einer Power over Ethernet Technologie; oder
Starten, durch die Rechnervorrichtung (20), einer Kommunikation mit dem Zonensteuergerät (120).

10. Verfahren nach einem der Ansprüche 7 bis 9, wobei in dem Initialisierungsvorgang Kommunikationsinformationen und/oder Autorisierungsinformationen in dem Zonensteuergerät (120) und/oder in den Komponenten (140) des Zonenmoduls (100) aktualisiert werden.

11. Verfahren nach einem der Ansprüche 7 bis 10, wobei das Verfahren ferner umfasst:
bei einer erfolgreichen fahrzeugseitigen Autorisierung des Zonenmoduls (100) und/oder einer erfolgreichen zonenmodulseitigen Autorisierung des Zonenmoduls (100), Anschalten einer Stromversorgung des Zonenmoduls (1009 durch ein für ein anderes Zonenmodul (10) vorgesehenes weiteres Zonensteuergerät (12).

12. Verfahren nach einem der Ansprüche 7 bis 11, wobei das Verfahren ferner umfasst:
Überwachen einer Leistungsverteilung in dem Zonenmodul (100) und/oder
Abschließen einer Prüfung der Komponenten (140) des Zonenmoduls (100); und/oder
Abschließen eines Flashvorgangs der Komponenten (140) des Zonenmoduls (100).

13. Verfahren nach einem der Ansprüche 7 bis 12, wobei das Verfahren ein Durchführen eines lokalen Diagnosevorgangs zur Prüfung von Komponenten (140) einer Vielzahl von Zonenmodulen (100) durch ein für das jeweilige Zonenmodul (100) der Vielzahl von Zonenmodulen (100) vorgesehenes Zonensteuergerät (120) umfasst.
